# EUROPEAN PATENT APPLICATION

(11) **EP 4 550 474 A1**
(43) Date of publication of application: **07.05.2025**
(21) Application number: 22962486.1
(22) Date of filing: 21.10.2022
(51) Int. Cl.: H01M 4/583, H01M 4/78

(54) **CARBONACEOUS MATERIAL AND PREPARATION METHOD THEREFOR, SECONDARY BATTERY CONTAINING CARBONACEOUS MATERIAL, AND ELECTRIC APPARATUS**

(71) Applicant: Contemporary Amperex Technology (Hong Kong) Limited, Central, Hong Kong (CN)
(72) Inventor: CHEN, Xiaoxia, Ningde, Fujian 352100 (CN); ZHANG, Xinxin, Ningde, Fujian 352100 (CN); OUYANG, Chuying, Ningde, Fujian 352100 (CN); MA, Yu, Ningde, Fujian 352100 (CN); LI, Xiaolong, Ningde, Fujian 352100 (CN); ZHENG, Xiaoji, Ningde, Fujian 352100 (CN); LIN, Wenguang, Ningde, Fujian 352100 (CN); CHEN, Shangdong, Ningde, Fujian 352100 (CN)
(74) Representative: Gong, Jinping
(86) International application number: PCT/CN2022/126830
(87) International publication number: WO 2024/082304

(57) **Abstract**

The present application provides a carbonaceous material and a preparation method thereof, as well as a secondary battery and an electrical apparatus containing the same. In the CO₂ adsorption test of the carbonaceous material, the total CO₂ adsorption at 0°C and a relative pressure P/P₀ between 10⁻⁸ and 0.029 is recorded as A, the adsorption time is recorded as B, and the carbonaceous material satisfies: A/B≥1.7 cm³/(g×h) STP, where STP is the standard condition, P represents the test pressure of CO₂, and P₀ represents the saturated vapor pressure of CO₂ at 0°C. The carbonaceous material of the present application can achieve both high capacity and high first Coulomb efficiency.

## Description

### TECHNICAL FIELD

The present application belongs to the technical field of batteries, and particularly relates to a carbonaceous material and a preparation method thereof, as well as a secondary battery and an electrical apparatus containing the same.

### BACKGROUND ART

In recent years, secondary batteries are widely used in energy storage power source systems such as water power, thermal power, wind power and solar power stations, as well as power tools, electric bicycles, electric motorcycles, electric vehicles, military equipment, aerospace and other fields. With the application and popularization of secondary batteries, their energy density, service life and rate performance have attracted more and more attention. Graphite is the most commonly used negative electrode active material for secondary batteries, but its theoretical gram capacity is only 372mAh/g, and the room for energy density improvement is very limited. At the same time, the interlayer spacing of graphite is small, which also limits its rate performance improvement. As a new type of negative electrode active material, hard carbon can achieve rapid intercalation and deintercalation of active ions during the charge and discharge process of secondary batteries, so its development prospects are very broad. However, hard carbon has low capacity and first Coulombic efficiency, and its effect on improvement of energy density, service life and rate performance of secondary batteries is limited.

### SUMMARY OF THE INVENTION

The objective of the present application is to provide a carbonaceous material and a preparation method thereof, as well as a secondary battery and an electrical apparatus containing the same, aiming to simultaneously increase the capacity and first Coulombic efficiency of the carbonaceous material.

A first aspect of the present application provides a carbonaceous material. In the CO₂ adsorption test of the carbonaceous material, the total CO₂ adsorption at 0°C and a relative pressure P/P₀ between 10⁻⁸ and 0.029 is recorded as A, the adsorption time is recorded as B, and the carbonaceous material satisfies: A/B≥1.7 cm³/(g×h) STP, where STP is the standard condition, P represents the test pressure of CO₂, and P₀ represents the saturated vapor pressure of CO₂ at 0°C.

During the research, the inventors of the present application found that in the CO₂ adsorption test of carbonaceous materials, the ratio A/B of the total CO₂ adsorption A at 0°C and a relative pressure P/P₀ between 10⁻⁸ and 0.029 to the CO₂ adsorption time B corresponding to this adsorption can reflect the space content in the carbonaceous material suitable for storage and reversible intercalation and deintercalation of active ions. With A/B≥1.7 cm³/(g×h) STP, the CO₂ adsorption rate is fast, and it is believed that the carbonaceous material contains much space suitable for storing active ions, and the space availability is also high. Therefore, the carbonaceous material of the present application can have both high capacity and high first Coulombic efficiency, and can also enable the secondary battery to have high energy density, long service life and good rate performance at the same time.

In any of embodiments of the present application, 1.7 cm³/(g×h) STP≤A/B≤20 cm³/(g×h) STP, optionally, 3.0 cm³/(g×h) STP≤A/B≤20 cm³/(g×h) STP. At this time, the carbonaceous material contains more space suitable for storing active ions and/or the space availability is higher, thereby further improving the capacity and first Coulombic efficiency of the carbonaceous material.

In any of embodiments of the present application, B≥5h, and optionally 5h≤B≤10h. When the CO₂ adsorption time B is long, it is considered that the carbonaceous material contains much space suitable for storing active ions, and therefore the carbonaceous material has a high capacity.

In any of embodiments of the present application, A≥10 cm³/g STP, optionally, 15 cm³/g STP≤A≤200 cm³/g STP. When the total CO₂ adsorption A is high, it is considered that the carbonaceous material contains much space suitable for storing active ions, and therefore the carbonaceous material has a high capacity.

In any of embodiments of the present application, the true density ρ of the carbonaceous material is ≤1.45g/cm³, optionally 1.0g/cm³-1.45g/cm³. When the true density of the carbonaceous material meets the above-mentioned specific range, it will help to further improve the capacity and first Coulombic efficiency of the carbonaceous material.

In any of embodiments of the present application, the carbonaceous material includes a plurality of nanopore structures, and optionally, the carbonaceous material includes a plurality of pore structures with a diameter of 10nm or less.

In any of embodiments of the present application, in the Raman spectrum of the carbonaceous material, I_{d}/I_{g} is 0.90-1.25, optionally 1.05-1.15, where I_{d} represents the d-peak intensity of the Raman shift in the range of 1350±50cm⁻¹, and I_{g} represents the g-peak intensity of the Raman shift in the range of 1580±50cm⁻¹. At this time, the degree of order of the carbonaceous material structure is moderate, so that the carbonaceous material has higher capacity and higher first Coulombic efficiency, and also has good rate performance.

In any of embodiments of the present application, the interlayer spacing of the (002) crystal plane of the carbonaceous material is ≥0.37nm, optionally 0.37nm-0.42nm.

In any of embodiments of the present application, in the X-ray diffraction spectrum of the carbonaceous material, the 2θ value corresponding to the (002) crystal plane peak is between 22° and 24°.

In any of embodiments of the present application, the volume particle size Dv50 of the carbonaceous material is 3µm-15µm, optionally 4µm-6µm.

In any of embodiments of the present application, the volume particle size Dv90 of the carbonaceous material is 8µm-30µm, optionally 9µm-12µm.

When the volume particle size Dv50 and/or Dv90 of the carbonaceous material is within a suitable range, it is beneficial to improving the active ion and electron transport performance, thereby further improving the rate performance of the secondary battery.

In any of embodiments of the present application, the specific surface area of the carbonaceous material is 1m²/g-10m²/g, optionally 1m²/g-5m²/g. When the specific surface area of the carbonaceous material is within a suitable range, the carbonaceous material can have both higher capacity and higher first Coulombic efficiency, as well as better rate performance.

In any of embodiments of the present application, the powder compacted density of the carbonaceous material under a force of 50,000N is 0.90g/cm³-1.05g/cm³, optionally 0.93g/cm³-1.02g/cm³. When the powder compacted density of the carbonaceous material is within a suitable range, the compacted density of the negative electrode plate can be increased, thereby increasing the energy density of the secondary battery.

In any of embodiments of the present application, the tap density of the carbonaceous material is 0.80g/cm³-0.95g/cm³, optionally 0.85g/cm³-0.9g/cm³. When the tap density of the carbonaceous material is within a suitable range, the compacted density of the negative electrode plate can be increased, thereby increasing the energy density of the secondary battery.

A second aspect of the present application provides a method for preparing a carbonaceous material, comprising steps of:
S10, providing raw materials: the raw materials are organic carbon sources;
S20, crushing: the raw materials are crushed;
S30, washing and impurity removal: the crushed raw materials obtained in S20 are subjected to washing and impurity removal, and the washing and impurity removal process at least includes an acidic solution washing step and an alkaline solution washing step;
S40, low-temperature pre-carbonization: the raw materials obtained after washing and impurity removal in S30 are placed into a kiln, and under the conditions of a protective gas atmosphere and a furnace pressure of ≤-2kPa, heated to a first temperature T1 at a first rate of ≥20°C/min, then incubated at the first temperature T1 for a first time t1, and after the incubation, prepyrolyzed carbon is obtained;
S50, high-temperature carbonization: the prepyrolyzed carbon obtained in S40 is placed in a kiln, under the conditions of a protective gas atmosphere, a furnace pressure of <-2kPa, and a bulk density of ≤0.6g/cm³, heated to a second temperature T2 at a second rate, and then incubated at the second temperature T2 for a second time t2, and after the incubation, the carbonaceous material is obtained, wherein in the CO₂ adsorption test of the carbonaceous material, the total CO₂ adsorption at 0°C and a relative pressure P/P₀ between 10⁻⁸ and 0.029 is recorded as A, the adsorption time is recorded as B, and the carbonaceous material satisfies: A/B≥1.7 cm³/(g×h) STP, where STP is the standard condition, P represents the test pressure of CO₂, and P₀ represents the saturated vapor pressure of CO₂ at 0°C.

The carbonaceous material obtained by the preparation method provided by the present application has much active ion storage space, and high space availability, which enables the carbonaceous material to have both high capacity and high first Coulombic efficiency, and also enables the secondary battery to have high energy density, long service life and good rate performance at the same time.

In any of embodiments of the present application, in S10, the organic carbon source includes one or more of biomass materials and thermoplastic resin materials.

In any of embodiments of the present application, the biomass material includes one or more of energy crops and biomass waste.

In any of embodiments of the present application, the thermoplastic resin material includes one or more of phenolic resin, acrylic resin, polyvinyl chloride, polycarbonate, epoxy resin, polyformaldehyde, coumarone resin and petroleum resin.

In any of embodiments of the present application, in S30, the washing and impurity removal process includes the following steps in sequence: acidic solution washing, water washing, alkaline solution washing, water washing and drying; or, in S30, the washing and impurity removal process includes the following steps in sequence: alkaline solution washing, water washing, acidic solution washing, water washing and drying.

In any of embodiments of the present application, the H⁺ concentration of the acidic solution is 0.1mol/L-6moL/L, optionally 1mol/L-6moL/L.

In any of embodiments of the present application, the washing temperature of the acidic solution is 10°C-95°C, and optionally 30°C-95°C.

In any of embodiments of the present application, the washing time of the acidic solution is 1h-24h, optionally 10h-24h.

In any of embodiments of the present application, the solute of the acidic solution includes one or more of hydrochloric acid, nitric acid, sulfuric acid and perchloric acid, and the solvent is water.

By adjusting one or more of the H⁺ concentration, washing temperature, washing time, solute type, etc. of the acidic solution within the above ranges, it helps to achieve sufficient washing and better remove metal impurities.

In any of embodiments of the present application, the OH⁻ concentration of the alkaline solution is 0.1mol/L-6moL/L, optionally 1mol/L-6moL/L.

In any of embodiments of the present application, the washing temperature of the alkaline solution is 10°C-95°C, and optionally 30°C-95°C.

In any of embodiments of the present application, the washing time of the alkaline solution is 1h-24h, optionally 10h-24h.

In any of embodiments of the present application, the solute of the alkaline solution includes NaOH, KOH or a combination thereof, and the solvent is water.

By adjusting one or more of the OH⁻ concentration, washing temperature, washing time, solute type, etc. of the alkaline solution within the above ranges, it helps to achieve sufficient washing.

In any of embodiments of the present application, in S40, the temperature T1 is 300°C-600°C, optionally 400°C-500°C. When the first temperature T1 is within a suitable range, it helps to form through pore structures and provide fast escape channels.

In any of embodiments of the present application, in S40, the time t1 is 1h-24h, optionally 6h-12h.

In any of embodiments of the present application, in S40, the heating rate is 20°C/min-35°C/min, optionally 25°C/min-30°C/min. This helps carbonaceous materials to better achieve high capacity and high first Coulombic efficiency.

In any of embodiments of the present application, in S40, the protective gas includes nitrogen, argon, helium or a combination thereof.

In any of embodiments of the present application, in S40, the furnace pressure is -5kPa to -2kPa, optionally -4.5kPa to -3kPa. This will help ensure safe production.

In any of embodiments of the present application, in S50, the temperature T2 is 1000°C-1600°C, optionally 1200°C-1400°C. When the second temperature T2 is within a suitable range, it can cause a pore-closing effect on the prepyrolyzed carbon obtained by low-temperature pre-carbonization, thereby reducing the contact area between the carbonaceous material and the electrolyte solution, that is, reducing the consumption of active ions by SEI film formation, and improving the first Coulombic efficiency of carbonaceous materials; it can also aromatize the prepyrolyzed carbon obtained by low-temperature pre-carbonization, thereby improving the degree of order and conductivity of carbonaceous materials, and at the same time it can remove excess O elements and H elements on the carbon skeleton structure, and contribute to the formation of an ordered pseudographite microcrystalline structure.

In any of embodiments of the present application, in S50, the time t1 is 1h-24h, optionally 6h-12h.

In any of embodiments of the present application, in S50, the heating rate is 1 °C/min-10°C/min, optionally 3°C/min-5°C/min. This is beneficial to improving the capacity and/or first Coulombic efficiency of carbonaceous materials.

In any of embodiments of the present application, in S50, the protective gas includes nitrogen, argon, helium or a combination thereof.

In any of embodiments of the present application, in S50, the furnace pressure is -5kPa to -2kPa, optionally -4.5kPa to -3kPa. This will help ensure safe production.

A third aspect of the present application provides a secondary battery comprising a negative electrode plate, and the negative electrode plate comprises the carbonaceous material of the first aspect of the present application or the carbonaceous material prepared by the method of the second aspect of the present application.

A fourth aspect of the present application provides an electrical apparatus comprising the secondary battery of the third aspect of the present application.

The carbonaceous material provided by the present application has much active ion storage space, and high space availability, which enables the electrical apparatus of the present application comprises the secondary battery provided by the present application, and thus has at least the same advantages as those of the secondary battery.

### DESCRIPTION OF DRAWINGS

In order to explain the technical solutions of the embodiments of the present application more clearly, the drawings required to be used in the embodiments of the present application will be briefly introduced below. Apparently, the drawings described below are merely some embodiments of the present application. For those of ordinary skills in the art, other drawings may also be obtained based on these drawings without making creative work.
Fig. 1 is a schematic diagram of an embodiment of a battery cell according to the present application.
Fig. 2 is a schematic exploded diagram of an embodiment of a battery cell according to the present application.
Fig. 3 is a schematic diagram of an embodiment of a battery module according to the present application.
Fig. 4 is a schematic diagram of an embodiment of a battery pack according to the present application.
Fig. 5 is a schematic exploded diagram of the embodiment of the battery pack shown in Fig. 4.
Fig. 6 is a schematic diagram of an embodiment of an electrical apparatus comprising the secondary battery of the present application as a power source.
Fig. 7 is a graph of the total adsorption-adsorption time in the CO₂ adsorption test of the carbonaceous material prepared in Example 1.
Fig. 8 is a graph of the total adsorption-relative pressure P/P₀ in the CO₂ adsorption test of the carbonaceous material prepared in Example 1.
Fig. 9 is a graph of the total adsorption-adsorption time in the CO₂ adsorption test of the carbonaceous material prepared in Comparative Example 1.
Fig. 10 is a graph of the total adsorption-relative pressure P/P₀ in the CO₂ adsorption test of the carbonaceous material prepared in Comparative Example 1.

In the drawings, the drawings may not be drawn to actual scale. Description of reference numerals: 1 battery pack, 2 upper box body, 3 lower box body, 4 battery module, 5 battery cell, 51 case, 52 electrode assembly, 53 cover plate.

### DETAILED DESCRIPTION

Hereinafter, embodiments that specifically disclose the carbonaceous material and the preparation method thereof, as well as the secondary battery and the electrical apparatus containing the same according to the present application will be described in detail with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, the numerical range "a-b" represents an abbreviated representation of any combination of real numbers between a and b, where a and b are real numbers. For example, the numerical range "0-5" indicates that all real numbers between "0-5" are listed herein, and "0-5" is just an abbreviated representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specifically stated, the "including" and "comprising" mentioned in the present application mean open-ended, or may be closed-ended. For example, the "including" and "comprising" may indicate that it is also possible to include or comprise other components not listed, and it is also possible to include or comprise only the listed components.

If not specifically stated, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

Unless otherwise stated, the terms used herein have the well-known meanings commonly understood by those skilled in the art.

Unless otherwise stated, the values of the parameters mentioned in the present application can be measured using various testing methods commonly used in the art, for example, measured according to the testing methods given in the present application.

Unless otherwise stated, in the present application, the term "active ion" refers to ions, includes but is not limited to lithium ions, sodium ions, etc. that can be intercalated and deintercalated back and forth between the positive and negative electrodes of a secondary battery.

In the present application, the terms "multiple" and "a plurality of" refer to two or more.

As defined by the International Union of Pure and Applied Chemistry (IUPAC), micropores refer to pores with a diameter of <2nm, mesopores refer to pores with a diameter of 2nm-50nm, and macropores refer to pores with a diameter of >50nm.

In the context of the present application, wherever present, the term "micropore" refers to a pore with a diameter of <2 nm, the term "mesopore" refers to a pore with a diameter of 2nm-50nm, and the term "macropore" refers to a pore with a diameter of >50nm.

In the context of the present application, the term "small mesopore" refers to a pore with a diameter of 2nm-10nm, and the term "large mesopore" refers to a pore with a diameter of greater than 10nm and less than or equal to 50nm.

With the application and popularization of secondary batteries, their energy density, service life and rate performance have attracted more and more attention. The performance of the negative electrode active material determines the energy density, service life and safety of the secondary battery to a certain extent. Graphite (including natural graphite and artificial graphite) is the most commonly used negative electrode active material for secondary batteries, but its theoretical gram capacity is only 372mAh/g, resulting in very limited room for energy density improvement. At the same time, the interlayer spacing of graphite is small, and it is also limited in rate performance improvement, so that it can no longer meet the actual demand for high-rate performance secondary batteries.

Compared with graphite, hard carbon has a larger interlayer spacing. Therefore, it is conducive to the rapid intercalation and deintercalation of active ions, which enables secondary batteries to have excellent low-temperature performance, power performance and safety performance. Especially in the field of power batteries, hard carbon has unique advantages. However, most of the currently commercialized hard carbons are low-capacity hard carbons with low capacity and first Coulombic efficiency. For example, their capacity is usually between 200mAh/g and 280mAh/g, and their first Coulombic efficiency is usually lower than 80%. As a result, their practical application is severely limited.

Therefore, how to improve both the capacity and the first Coulombic efficiency of hard carbon is still an urgent technical problem that needs to be solved.

In view of this, a first aspect of the embodiments of the present application provides a carbonaceous material that has both high capacity and high first Coulombic efficiency, and enables secondary batteries to have high energy density, long service life, and good rate performance at the same time.

### Carbonaceous materials

In the CO₂ adsorption test of the carbonaceous material provided by the present application, the total adsorption of CO₂ at 0°C and a relative pressure P/P₀ between 10⁻⁸ and 0.029 is recorded as A, the adsorption time is recorded as B, and the carbonaceous material satisfies: A/B≥1.7 cm³/(g×h) STP, where STP is the standard conditions (standard temperature and pressure), P represents the test pressure of CO₂, and P₀ represents the saturated vapor pressure of CO₂ at 0°C.

In the present application, the CO₂ adsorption test of carbonaceous materials can be carried out with reference to GB/T 21650.2-2008 using a surface area and pore size analyzer. The testing instrument can be the ASAP 2460 surface area and pore size analyzer from Micromeritics in U.S.

Compared with currently commercialized hard carbons, the carbonaceous material provided by the present application has both high capacity and high first Coulombic efficiency. Although the mechanism is not yet clear, the inventors speculate that a possible reason is that the carbonaceous material provided by the present application has a unique pore structure, which has a large amount of active ion storage space and high space availability, thereby facilitating the intercalation, storage and deintercalation of active ions, so that the carbonaceous material provided by the present application can have both high capacity and high first Coulombic efficiency.

During the research, the inventors of the present application found that in the CO₂ adsorption test of carbonaceous materials, the ratio A/B of the total CO₂ adsorption A at 0°C and a relative pressure P/P₀ between 10⁻⁸ and 0.029 to the CO₂ adsorption time B corresponding to this adsorption can reflect the space content in the carbonaceous material suitable for storage and reversible intercalation and deintercalation of active ions. With A/B≥1.7 cm³/(g×h) STP, the CO₂ adsorption rate is fast, and it is believed that the carbonaceous material contains much space suitable for storing active ions, and the space availability is also high. Therefore, the carbonaceous material of the present application can have both high capacity and high first Coulombic efficiency, and can also enable the secondary battery to have high energy density, long service life and good rate performance at the same time.

When A/B is less than 1.7 cm³/(g×h) STP, the CO₂ adsorption rate is very slow, and it is believed that the carbonaceous material contains very little space suitable for storing active ions and/or the space availability is very low, thus the capacity of the carbonaceous materials is low, and the first Coulombic efficiency is also low.

In some embodiments, A/B can be ≥2.0 cm³/(g×h) STP, ≥3.0 cm³/(g×h) STP, ≥4.0 cm³/(g×h) STP, ≥5.0 cm³/(g×h) STP, ≥6.0 cm³/(g×h) STP, ≥7.0 cm³/(g×h) STP, ≥8.0 cm³/(g×h) STP. Optionally, 1.7 cm³/(g×h) STP≤A/B≤20 cm³/(g×h) STP, 3.0 cm³/(g×h) STP≤A/B≤20 cm³/(g×h) STP, 5.0 cm³/(g×h) STP≤A/B≤20 cm³/(g×h) STP, 8.0 cm³/(g×h) STP≤A/B≤20 cm³/(g×h) STP. At this time, the carbonaceous material contains more space suitable for storing active ions and/or the space availability is higher, thereby further improving the capacity and first Coulombic efficiency of the carbonaceous material.

In some embodiments, B≥5h. For example, B can be ≥5h, ≥5.5h, ≥6h, ≥6.5h, ≥7h, optionally, 5h≤B≤10h, 5.5h≤B≤10h, 6h≤B≤10h, 6.5h≤B≤10h, 7h≤B≤10h. When the CO₂ adsorption time B is long, it is considered that the carbonaceous material contains much space suitable for storing active ions, and therefore the carbonaceous material has a high capacity. When the CO₂ adsorption time B is short, the carbonaceous material reaches adsorption equilibrium in a short time, and it is believed that the carbonaceous material contains very little space suitable for storing active ions and/or the space availability is very low. As a result, the carbonaceous material has low capacities and low first Coulombic efficiency.

In some embodiments, A≥10 cm³/g STP. For example, A can be ≥18 cm³/g STP, ≥20 cm³/g STP, ≥30 cm³/g STP, ≥50 cm³/g STP, ≥60 cm³/g STP, ≥80 cm³/g STP, optionally, 15 cm³/g STP≤A≤200 cm³/g STP, 20 cm³/g STP≤A≤200 cm³/g STP, 30 cm³/g STP≤A≤200 cm³/g STP, 50 cm³/g STP≤A≤200 cm³/g STP, 80 cm³/g STP≤A≤200 cm³/g STP. When the total CO₂ adsorption A is high, it is considered that the carbonaceous material contains much space suitable for storing active ions, and therefore the carbonaceous material has a high capacity. When the total CO₂ adsorption A is low, it is considered that the carbonaceous material contains very little space suitable for storing active ions, and therefore the carbonaceous material has a low capacity.

In some embodiments, the carbonaceous material includes a plurality of nanopore structures. Optionally, the carbonaceous material includes a plurality of pore structures with a diameter of 10nm or less. In some embodiments, the carbonaceous material may also include one or more pore structures with a diameter of 10nm or more.

In some embodiments, the carbonaceous material has a true density ρ of ≤1.45 g/cm³. For example, the true density ρ of the carbonaceous material may be ≤1.40g/cm³, ≤1.38g/cm³, ≤1.36g/cm³, ≤1.34g/cm³, ≤1.30g/cm³. Optionally, the true density ρ of the carbonaceous material is 1.0g/cm³-1.45g/cm³, 1.0g/cm³-1.40g/cm³, 1.0g/cm³-1.38g/cm³, 1.0g/cm³-1.36g/cm³, 1.0g/cm³-1.34g/cm³, 1.0g/cm³-1.32g/cm³, 1.0g/cm³-1.30g/cm³. When the true density of the carbonaceous material meets the above-mentioned specific range, it will help to further improve the capacity and first Coulombic efficiency of the carbonaceous material.

When the true density of the carbonaceous material is large, the calibration liquid (such as n-butanol) can easily infiltrate the inside of the carbonaceous material particles. It is believed that the pore-closing effect of the carbonaceous material at this time is poor, and the large mesopore structures and/or macropore structures are abundant. As a result, the micropore structures and/or small mesopore structures are easily exposed to the electrolyte solution, resulting in a reduction in active ion storage space, which in turn leads to a reduction in the capacity and first Coulombic efficiency of the carbonaceous material.

When the true density of carbonaceous materials is small, it is believed that the carbonaceous materials have rich micropore structures and/or small mesopore structures and good pore-closing effect. At this time, the calibration liquid (such as n-butanol) enters less space than the actual pore space of carbonaceous materials, and the pore structures which are not entered can store active ions; at the same time, the electrolyte solution is not easy to enter the inside of carbonaceous material particles, so that the consumption of active ions during the formation of the solid electrolyte interface film (SEI film) is reduced. Furthermore, the true density of the carbonaceous material should not be too low, otherwise the active ions may not be easily intercalated and stored due to too good pore-closing effect of the carbonaceous material.

In the present application, the true density of the carbonaceous material has a meaning well-known in the art, and can be tested by instruments and methods known in the art. For example, it can be tested by the Archimedean immersion volume displacement method with n-butanol as the calibration liquid. The testing instrument can be a powder true density meter.

In some embodiments, the carbonaceous material may have a regular or irregular morphology. For example, the morphology of the carbonaceous material may be an irregular polygonal shape.

In some embodiments, the C element content in the carbonaceous material may be ≥90wt%, optionally 90wt%-98wt%.

In some embodiments, the O element content in the carbonaceous material may be 2wt%-8wt%.

In some embodiments, the H element content in the carbonaceous material may be ≤0.3wt%, optionally 0.1-0.2wt%.

In some embodiments, the N element content in the carbonaceous material may be ≤0.3wt%, optionally 0.01wt%-0.1wt%.

In some embodiments, the sum of the C, O, H and N element contents in the carbonaceous material may be ≥99wt%, optionally 99wt%-99.5wt%.

In some embodiments, the S element content in the carbonaceous material may be ≤0.2wt%, optionally 0.01wt%-0.1wt%.

In some embodiments, the Na element content in the carbonaceous material may be ≤0.0164wt%, optionally ≤0.005wt%.

In some embodiments, in the Raman spectrum of the carbonaceous material, I_{d}/I_{g} is 0.90-1.25, I_{d} represents the d-peak intensity of the Raman shift in the range of 1350±50cm⁻¹, and I_{g} represents the g-peak intensity of the Raman shift in the range of 1580±50cm^{- 1}. For example, I_{d}/I_{g} can be 0.90, 0.95, 1.0, 1.05*,* 1.1, 1.15, 1.2, 1.25 or be within a range consisting of any of above numerical values. Optionally, I_{d}/I_{g} may be 1.05-1.15.

The Raman spectrum of carbonaceous materials can be tested using a Raman spectrometer. During the test, the d peak intensity and g peak intensity at 100 points are obtained, the I_{d}/I_{g} at the 100 points is calculated, and the largest and smallest 30 I_{d}/I_{g}s are removed, and the average value of the remaining 40 I_{d}/I_{g}s is used as the I_{d}/I_{g} of the carbonaceous material. The testing instrument can be a Horiba LabRAM HR800 Raman spectrometer. The test conditions can be: excitation wavelength 532nm, grating ruled with 600 lines, objective lens 50x, integration time 10s, cumulative times 3 times, surface scan.

The d peak is generated by the lattice defects of carbon atoms, and the g peak is generated by the in-plane vibration of sp2 carbon atoms. In the structure of carbonaceous materials, the intensity of the d peak is related to the number of structural defects of the carbonaceous material, and the intensity of the g peak is related to the number of pseudographite crystallites in the structure of the carbonaceous material. Therefore, I_{d}/I_{g} can characterize the degree of order of the structure of the carbonaceous material. The smaller the I_{d}/I_{g}, the higher the degree of order of the carbonaceous material structure and the higher the integrity of the carbon plane, the first Coulombic efficiency of the carbonaceous material increases, but the capacity becomes lower and the rate performance becomes worse. The carbonaceous material of the present application satisfies I_{d}/I_{g} being 0.90-1.25. At this time, the degree of order of the carbonaceous material structure is moderate, so that the carbonaceous material has higher capacity and higher first Coulombic efficiency, and also has good rate performance.

In some embodiments, the interlayer spacing of the (002) crystal plane of the carbonaceous material is ≥0.37nm, optionally 0.37nm-0.42nm.

In some embodiments, in the X-ray diffraction spectrum of the carbonaceous material, the 2θ value corresponding to the (002) crystal plane peak is between 22° and 24°.

In the present application, the interlayer spacing of the (002) crystal plane of the carbonaceous material can be tested using an X-ray diffractometer with reference to JIS K 0131-1996, JB/T 4220-2011. The testing instrument can be a Bruker D8 Discover X-ray diffractometer.

In some embodiments, the volume particle size Dv50 of the carbonaceous material is 3µm-15µm, optionally 4µm-6µm.

In some embodiments, the volume particle size Dv90 of the carbonaceous material is 8µm-30µm, optionally 9µm-12µm.

In some embodiments, the carbonaceous material has a volume particle size Dv50 of 3µm-15µm and a volume particle size Dv90 of 8µm-30µm. Optionally, the carbonaceous material has a volume particle size Dv50 of 4µm-6µm and a volume particle size Dv90 of 9µm-12µm.

When the volume particle size Dv50 and/or Dv90 of the carbonaceous material is within a suitable range, it is beneficial to improving the active ion and electron transport performance, thereby further improving the rate performance of the secondary battery.

In the present application, the volume particle sizes Dv50 and Dv90 of carbonaceous materials have well-known meanings in the art. They represent the corresponding particle size when the cumulative volume distribution percentage of the material reaches 50% and 90% respectively, and can be measured using instruments and methods known in the art. For example, they can be conveniently determined by using a laser particle size analyzer with reference to GB/T 19077-2016 Particle Size Distribution - Laser Diffraction. The testing instrument can be a Mastersizer 2000E laser particle size analyzer from Malvern Instruments Co., Ltd. in the UK.

In some embodiments, the specific surface area of the carbonaceous material is 1m²/g-10m²/g, optionally 1m²/g-5m²/g. When the specific surface area of carbonaceous materials is low, it helps to reduce the surface activity of carbonaceous materials and reduce the consumption of active ions by SEI film formation, thus improving the first Coulombic efficiency of carbonaceous materials and secondary batteries; when the specific surface area of carbonaceous materials is high, it helps to speed up the transmission of active ions, thereby improving the rate performance of the secondary battery. Therefore, when the specific surface area of the carbonaceous material is within a suitable range, the carbonaceous material can have both higher capacity and higher first Coulombic efficiency, as well as better rate performance. In addition, when the specific surface area of the carbonaceous material is within a suitable range, the carbonaceous material and the binder can also have a strong bonding force, which can improve the cohesion and adhesion of the negative electrode plate, reduce the volume expansion of the negative electrode plate during cycling, and make the secondary battery have better cycling performance.

In the present application, the specific surface area of the carbonaceous material has a meaning well-known in the art, and can be tested by instruments and methods known in the art. For example, it can be tested by using the nitrogen adsorption specific surface area analysis test method with reference to GB/T 19587-2017, and calculated using the BET (Brunauer Emmett Teller) method. The nitrogen adsorption specific surface area analysis test can be carried out using an ASAP 3020 surface area and pore size analyzer from Micromeritics in U.S.

In some embodiments, the powder compacted density of the carbonaceous material under a force of 50,000N is 0.90g/cm³-1.05g/cm³, optionally 0.93g/cm³-1.02g/ cm³. When the powder compacted density of the carbonaceous material is within a suitable range, the compacted density of the negative electrode plate can be increased, thereby increasing the energy density of the secondary battery.

In the present application, the powder compacted density of the carbonaceous material has a meaning well-known in the art, and can be tested by instruments and methods known in the art. For example, it can be measured using an electronic pressure testing machine (for example, UTM7305 type) with reference to the standard GB/T24533-2009. An exemplary test method is as follows: 1 g of carbonaceous material powder is weighed, added into a mold with a bottom area of 1.327cm², pressurized to 5000kg (equivalent to 50000N) and kept for 30s, then depressurized and kept for 10s, and then the data are recorded and calculated to obtain the powder compacted density of the carbonaceous material under a force of 50000N.

In some embodiments, the tap density of the carbonaceous material is 0.80g/cm³-0.95g/cm³, optionally 0.85g/cm³-0.9g/cm³. When the tap density of the carbonaceous material is within a suitable range, the compacted density of the negative electrode plate can be increased, thereby increasing the energy density of the secondary battery.

In the present application, the tap density of the carbonaceous material has a meaning well-known in the art, and can be tested by instruments and methods known in the art. For example, it can be measured by using a powder tap density tester with reference to GB/T 5162-2006. The testing instrument can be BT-301 from DANDONG BETTER.

### Preparation method of carbonaceous materials

A second aspect of the embodiments of the present application provides a preparation method of carbonaceous materials, comprising the following steps: S10, providing raw materials: the raw materials are organic carbon sources; S20, crushing: the raw materials are crushed; S30, washing and impurity removal: the crushed raw materials obtained in S20 are subjected to washing and impurity removal, and the washing and impurity removal process at least includes an acidic solution washing step and an alkaline solution washing step; S40, low-temperature pre-carbonization: the raw materials obtained after washing and impurity removal in S30 are placed into a kiln, and under the conditions of a protective gas atmosphere and a furnace pressure of ≤-2kPa, heated to a first temperature T1 at a first rate of ≥20°C/min, and then incubated at the first temperature T1 for a first time t1, and after the incubation, prepyrolyzed carbon is obtained; S50, high-temperature carbonization: the prepyrolyzed carbon obtained in S40 is placed in a kiln, under the conditions of a protective gas atmosphere, a furnace pressure of <-2kPa, and a bulk density of ≤0.6g/cm³, heated to a second temperature T2 at a second rate, and then incubated at the second temperature T2 for a second time t2, and after the incubation, the carbonaceous material is obtained, wherein in the CO₂ adsorption test of the carbonaceous material, the total CO₂ adsorption at 0°C and a relative pressure P/P₀ between 10⁻⁸ and 0.029 is recorded as A, the adsorption time is recorded as B, and the carbonaceous material satisfies: A/B≥1.7 cm³/(g×h) STP, where STP is the standard condition, P represents the test pressure of CO₂, and P₀ represents the saturated vapor pressure of CO₂ at 0°C.

The preparation method of carbonaceous materials in the present application includes a crushing process, a washing and impurity removal process, a low-temperature pre-carbonization process, and a high-temperature carbonization process.

Crushing can reduce the particle size of raw materials, which in turn helps to obtain carbonaceous materials of the required size. In some embodiments, the volume particle size Dv50 of the crushed particles is 3µm-15µm, optionally 4µm-6µm. In some embodiments, the volume particle size Dv90 of the crushed particles is 8µm-30µm, optionally 9µm-12µm. In some embodiments, the crushed particles have a volume particle diameter Dv50 of 3µm-15µm and a volume particle diameter Dv90 of 8µm-30µm, and optionally, the crushed particles have a volume particle diameter Dv50 of 4µm-6µm and a volume particle diameter Dv90 of 9µm-12µm.

The washing and impurity removal can remove inorganic impurities and water-soluble impurities in the raw materials, and prevent metal impurities from being reduced to metal elements and then agglomerating during the subsequent high-temperature carbonization process. The agglomeration process of metal elements will lead to the collapse of the carbon skeleton structure, especially the collapse of the micropore structure and/or small mesopore structure, which will lead to reduced active ion storage space and decreased capacity of the obtained carbonaceous material. At this time, the carbonaceous materials reach adsorption equilibrium in a shorter time, and the CO₂ adsorption rate slows down; metal impurities also have catalytic activity, which will lead to an increase in the decomposition of the carbon skeleton structure during the pyrolysis process, making the pore structure tend to form large mesopore structures and/or macropore structures of large size. This leads to an increase in the proportion of the electrolyte solution infiltration area inside the obtained carbonaceous material, an increase in the consumption of active ions by SEI film formation, an increase in the first irreversible capacity loss, and a decrease in the first Coulombic efficiency. In addition, after the carbon skeleton structure collapses, its volume shrinks, which will also lead to an increase in the true density of the carbonaceous material. The washing and impurity removal process at least includes an acidic solution washing step and an alkaline solution washing step. The acidic solution is mainly used to remove metal impurities in the raw materials, and the alkaline solution is mainly used to remove Si-containing impurities in the raw materials that cannot react with acids. This ensures adequate removal of impurities.

The crushing process must be carried out before the washing and impurity removal process, which can make the surface of the raw material particles exposed as much as possible during washing and impurity removal, so that the raw material particles and the washing liquid can be in adequate contact, thereby improving the impurity removal effect. If the crushing process is carried out after the washing and impurity removal process, the washing liquid may not be able to enter the bulk phase of the large raw material particles, and the impurities that are deeply wrapped in the bulk phase of the large raw material particles cannot be removed, resulting in a poor impurity removal effect. During the subsequent low-temperature pre-carbonization and high-temperature carbonization processes, the unremoved metal impurities are reduced to metal elements and easily agglomerate, causing the carbon skeleton structure to collapse, which in turn leads to a reduction in the active ion storage space of the obtained carbonaceous material. At the same time, the collapse of the carbon skeleton structure will lead to incoherence in the pore structures, and part of the pore structures cannot store active ions, which will lead to a decrease in the capacity of the obtained carbonaceous material. At this time, the carbonaceous material will reach adsorption equilibrium in a short time, and the CO₂ adsorption rate slows down. The unremoved metal impurities still have catalytic activity, which will lead to an increase in the decomposition of the carbon skeleton structure during the pyrolysis process, causing the pore structures to tend to form large mesopore structures and/or macropore structures of large size, thus resulting in increased proportion of the electrolyte solution infiltration area inside the carbonaceous material, increased consumption of active ions by SEI film formation, increased first irreversible capacity loss, and decreased first Coulombic efficiency. In addition, after the carbon skeleton structure collapses, its volume shrinks, which will also lead to an increase in the true density of the carbonaceous material.

Low-temperature pre-carbonization helps to form through pore structures to provide fast escape channels. During the low-temperature pre-carbonization process, a large number of covalent bonds between C, H, and O atoms are broken, and certain through-channel structures are built in the carbon skeleton structure, which can provide channels for the escape of gas generated by pyrolysis in a short time during the subsequent high-temperature carbonization process to avoid the gas generated during pyrolysis from being blocked inside the particles and undergoing secondary pyrolysis to form carbon and block the pore structures, it can also avoid carbon skeleton structure collapse and pore structure blockage as a result of violent impact on the carbon skeleton structure by H₂ generated in a short period of time due to C-H breakage at about 700°C-800°C in the subsequent high-temperature carbonization process, thereby avoiding the consequent reduction of active ion storage space and space availability of the obtained carbonaceous material. In addition, after the carbon skeleton structure collapses, the pore structure is blocked, which will further increase the difficulty in intercalation of active ions and increase the true density of the carbonaceous material.

During low-temperature pre-carbonization, the heating rate is ≥20°C/min. If the heating rate is too slow, the resultant carbon skeleton structure will be fully adjusted, and the pore structures introduced will be small and discontinuous, which is not enough to form through-gas escape channels. As a result, the pore structures are easily blocked during the subsequent high-temperature carbonization process, and the obtained carbonaceous material has decreased active ion storage space, reduced space availability and decreased capacity. At this time, the carbonaceous material reaches adsorption equilibrium in a short time, and the CO₂ adsorption rate slows down.

The furnace pressure during low-temperature pre-carbonization and high-temperature carbonization is both <-2kPa. The inventors of the present application also unexpectedly discovered during the research that during low-temperature pre-carbonization and high-temperature carbonization, the furnace pressure of the kiln will affect the performance of the carbonaceous material finally prepared. If the furnace pressure is too high during low-temperature pre-carbonization, the gaseous small molecular substances released by pyrolysis will not be able to escape from the bulk phase of particles to the outside in time. Instead, these gaseous small molecular substances will be bound in the bulk phase of particles and converted into carbon by re-pyrolysis, which will block the pore structures and fail to provide sufficient gas escape channels for high-temperature carbonization. In addition, the gaseous small molecular substances released by pyrolysis during high-temperature carbonization will be blocked inside the particles to form carbon by secondary pyrolysis to block the pore structures, resulting in reduced active ion storage space, reduced space availability, and decreased capacity of the obtained carbonaceous material. At this time, the carbonaceous material reaches adsorption equilibrium in a short time, and the CO₂ adsorption rate slows down. If the furnace pressure is too high during high-temperature carbonization, the gaseous small molecular substances released by pyrolysis will not be able to escape from the bulk phase of particles to the outside in time. Instead, these gaseous small molecular substances will be bound in the bulk phase of particles and will be converted into carbon by re-pyrolysis to block the pore structures, resulting in reduced active ion storage space, decreased space availability and decreased capacity of the obtained carbonaceous material.

The bulk density during high-temperature carbonization is ≤0.6g/cm³. During the research, the inventors of the present application unexpectedly discovered that the bulk density of materials during high-temperature carbonization will also affect the performance of the carbonaceous material finally prepared. If the bulk density is too high, the materials will be packed too tightly and the gas escape channels will be blocked. Some of the blocked gaseous small molecular substances will be heated, then pyrolyzed again and converted into carbon and attached to the surface of the carbonaceous material, making active ions unable to enter the pore structures smoothly. As a result, the availability of the pore structure decreases, and the capacity of the carbonaceous material decreases. At this time, the carbonaceous material reaches adsorption equilibrium in a short time, and the CO₂ adsorption rate slows down. In addition, the accumulation of carbon formed by pyrolysis on the surface of the obtained carbonaceous material particles will also increase the difficulty in intercalation of active ions, which will lead to a reduction in the first Coulombic efficiency of the carbonaceous material. Also, the density of the carbon formed by pyrolysis is large, which results in an increase in the true density of the carbonaceous material.

Therefore, the carbonaceous material obtained by the preparation method provided by the present application has much active ion storage space, and high space availability, which enables the carbonaceous material to have both high capacity and high first Coulombic efficiency, and also enables the secondary battery to have high energy density, long service life and good rate performance at the same time.

The preparation method of the second aspect of the embodiments of the present application can prepare the carbonaceous material of any example of the first aspect of the embodiments of the present application. The preparation method of carbonaceous materials provided by the present application is simple and suitable for commercial production. The preparation method of carbonaceous materials provided by the present application does not require the addition of additional conductive agents or other additional auxiliaries, so the carbonaceous material obtained by the preparation method of the present application has a lower heteroatom content.

In the present application, "organic carbon source" means a general term for a class of substances which are rich in carbon elements and capable of forming carbonaceous materials. In some embodiments, in S10, the organic carbon source may include one or more of biomass materials and thermoplastic resin materials, and optionally, the organic carbon source may include biomass materials. In some embodiments, in S10, the organic carbon source may also include only biomass materials.

Biomass materials may be materials known in the art that are suitable for preparing carbonaceous materials. In some embodiments, the biomass material may include one or more of energy crops and biomass waste. For example, the biomass materials include but are not limited to one or more of wood, straw, bamboo, bark and fruit shells.

In some embodiments, the thermoplastic resin material may include one or more of phenolic resin, acrylic resin, polyvinyl chloride, polycarbonate, epoxy resin, polyformaldehyde, coumarone resin and petroleum resin.

In some embodiments, in S20, the crushing may use a process known in the art that is suitable for crushing in the preparation of carbonaceous materials. For example, the crushing may include but is not limited to ball mill or jet mill crushing.

The order of acidic solution washing and alkaline solution washing is not particularly limited. In some embodiments, in S30, the washing and impurity removal process includes the following steps in sequence: acidic solution washing, water washing, alkaline solution washing, water washing and drying. In some embodiments, in S30, the washing and impurity removal process includes the following steps in sequence: alkaline solution washing, water washing, acidic solution washing, water washing and drying. Deionized water can be used for water washing, and the number of washing can be one or more times until the pH of the filtrate becomes neutral (that is, the pH is 7±0.5), when the washing process is considered completed. Drying can be air drying or vacuum drying, until the mass change rate of the material after an interval of 2h is <0.1wt%, when the drying process is considered completed.

In the present application, there are no special restrictions on the solute type, concentration, washing temperature, washing time and other parameters of the acidic solution and alkaline solution, as long as the impurities can be fully removed.

In some embodiments, in S30, the H⁺ concentration of the acidic solution is 0.1mol/L-6moL/L, optionally 1mol/L-6moL/L.

In some embodiments, in S30, the washing temperature of the acidic solution is 10°C-95°C, optionally 30°C-95°C.

In some embodiments, in S30, the washing time of the acidic solution is 1h-24h, optionally 10h-24h.

In some embodiments, in S30, the solute of the acidic solution includes one or more of hydrochloric acid, nitric acid, sulfuric acid and perchloric acid, and the solvent is water. Thus, on the one hand, it can ensure that metal impurities are fully removed, and on the other hand, other impurity elements are not introduced.

By adjusting one or more of the H⁺ concentration, washing temperature, washing time, solute type, etc. of the acidic solution within the above ranges, it helps to achieve sufficient washing and better remove metal impurities.

In some embodiments, in S30, the OH⁻ concentration of the alkaline solution is 0.1mol/L-6moL/L, optionally 1mol/L-6moL/L.

In some embodiments, in S30, the washing temperature of the alkaline solution is 10°C-95°C, optionally 30°C-95°C.

In some embodiments, in S30, the washing time of the alkaline solution is 1h-24h, optionally 10h-24h.

In some embodiments, in S30, the solute of the alkaline solution includes NaOH, KOH or a combination thereof, and the solvent is water. Thus, on the one hand, it can ensure that Si-containing impurities are fully removed, and on the other hand, other impurity elements are not introduced.

By adjusting one or more of the OH⁻ concentration, washing temperature, washing time, solute type, etc. of the alkaline solution within the above ranges, it helps to achieve sufficient washing.

In some embodiments, in S40, the first rate may be 20°C/min-35°C/min, optionally 25°C/min-30°C/min. This helps carbonaceous materials to better achieve high capacity and high first Coulombic efficiency. If the heating rate is too fast during low-temperature pre-carbonization, it will easily cause the equipment temperature control to be out of control and break through the set holding temperature. At a temperature higher than the first temperature T1, the material will be pyrolyzed rapidly, the stability of the carbon skeleton structure will become worse at this time, the micropore structure and/or small mesopore structure may collapse, resulting in reduced active ion storage space and reduced capacity of the obtained carbonaceous material. At this time, the carbonaceous material reaches adsorption equilibrium in a short time. At the same time, collapse will also lead to the fusion of part of the pore structures and the introduction of larger pore structures, which will lead to an increase in the proportion of the electrolyte solution infiltration area inside the obtained carbonaceous material, increased consumption of active ions by SEI film formation, increased first irreversible capacity loss and reduced first Coulombic efficiency. At this time, the carbonaceous material shows a high true density.

In some embodiments, in S40, the protective gas may include nitrogen, argon, helium or a combination thereof.

In some embodiments, in S40, the furnace pressure may be -5kPa to -2kPa, optionally -4.5kPa to -3kPa. This will help ensure safe production. If the furnace pressure is too small, the powder will float and escape into the furnace under the action of negative pressure, contaminating the furnace and reducing the product yield. Also, it is easy for dust and protective gas to enter the exhaust pipe at the same time, increasing the risk of dust explosion.

In some embodiments, in S40, the first temperature T1 may be 300°C-600°C. For example, it may be 300°C, 350°C, 400°C, 450°C, 500°C, 550°C, 600°C or a range consisting of any of the above numerical values. Optionally, the first temperature T1 is 400°C-500°C. When the first temperature T1 is within a suitable range, it helps to form through pore structures and provide fast escape channels.

When the first temperature T1 is too high, the carbon skeleton structure will not have enough time to stabilize, resulting in insufficient strength of the carbon skeleton structure. During the subsequent high-temperature carbonization process, C-H breakage will occur at about 700°C-800°C to generate H₂ within a shot period of time to violently impact the carbon skeleton structure. At this time, the carbon skeleton structure will easily collapse and cause blockage of the pore structures, which will result in decreased active ion storage space, reduced space availability, and reduced capacity of the obtained carbonaceous material. At this time, the carbonaceous material reaches adsorption equilibrium in a short time, and the CO₂ adsorption rate slows down.

When the first temperature T1 is too high, the covalent bonds between C, H and O atoms are basically stable, and it is impossible to construct through-channel structures in the carbon skeleton structure. During the subsequent high-temperature carbonization process, C-H breakage will occur at about 700°C-800°C to generate H₂ within a shot period of time to violently impact the carbon skeleton structure. At this time, the carbon skeleton structure will easily collapse and cause blockage of the pore structures, which will result in decreased active ion storage space, reduced space availability, and reduced capacity of the obtained carbonaceous material. At this time, the carbonaceous material reaches adsorption equilibrium in a short time, and the CO₂ adsorption rate slows down. Additionally, after the carbon skeleton structure collapses, its volume shrinks, which will also lead to an increase in the true density of the carbonaceous material.

In some embodiments, in S40, the first time t1 is 1h-24h. For example, it can be 2h, 4h, 6h, 8h, 10h, 12h, 14h, 16h, 18h, 20h, 22h, 24h or a range consisting of any of the above numerical values. Optionally, the first time t1 is 6h-12h. Those skilled in the art can select an appropriate first time within the above range according to the first temperature used. For example, when the first temperature is relatively high, the first time can be appropriately shortened.

In some embodiments, in S50, the second rate may be 1°C/min-10°C/min, such as 1°C/min-8°C/min, 1°C/min-5°C/min, 3°C/min-5°C/min. This is beneficial to improving the capacity and/or first Coulombic efficiency of carbonaceous materials. During high-temperature carbonization, if the heating rate is too fast, the gaseous small molecular substances released during the pyrolysis of the pre-pyrolysis carbon will not be able to escape from the bulk phase of particles to the surface in time and then be conducted to the furnace and be discharged with the aid of the furnace protective gas. Instead, these gaseous small molecular substances will be bound in the bulk phase of particles and converted into carbon by pyrolysis again, blocking the pore structures, resulting in decreased active ion storage space and reduced capacity of the obtained carbonaceous material. At this time, the carbonaceous material reaches adsorption equilibrium in a short time, and the CO₂ adsorption rate slows down. In addition, if the heating rate is too fast, gaseous small molecular substances that have no time to escape to the outside will impact the carbon skeleton structure, causing the carbon skeleton structure to collapse, thereby resulting in increased proportion of the electrolyte solution infiltration area inside the carbonaceous material obtained, increased consumption of active ions by SEI film formation, increased first irreversible capacity loss, and reduced first Coulombic efficiency. At this time, the carbonaceous material shows a high true density.

In some embodiments, in S50, the protective gas may include nitrogen, argon, helium or a combination thereof.

In some embodiments, in S50, the furnace pressure may be -5kPa to -2kPa, optionally -4.5kPa to -3kPa. This will help ensure safe production. During high-temperature carbonization, if the furnace pressure is too small, the powder will float and escape into the furnace under the action of negative pressure, contaminating the furnace and reducing the product yield. Also, it is easy for dust and protective gas to enter the exhaust pipe at the same time, increasing the risk of dust explosion.

In some embodiments, in S50, the second temperature T2 may be 1000°C-1600°C, for example, it may be 1000°C, 1050°C, 1100°C, 1150°C, 1200°C, 1250°C, 1300°C, 1350°C, 1400°C, 1450°C, 1500°C, 1550°C, 1600°C or a range consisting of any of the above numerical values. Optionally, the second temperature T2 is 1200°C-1400°C. When the second temperature T2 is within a suitable range, it can cause a pore-closing effect on the prepyrolyzed carbon obtained by low-temperature pre-carbonization, thereby reducing the contact area between the carbonaceous material and the electrolyte solution, that is, reducing the consumption of active ions by SEI film formation, and improving the first Coulombic efficiency of carbonaceous materials; it can also aromatize the prepyrolyzed carbon obtained by low-temperature pre-carbonization, thereby improving the degree of order and conductivity of carbonaceous materials, and at the same time it can remove excess O elements and H elements on the carbon skeleton structure, and contribute to the formation of an ordered pseudographite microcrystalline structure.

When the second temperature T2 is too high, in a high-energy state, the pseudographite microcrystalline structures will fuse in large quantities, which will cause larger size and reduced number of the pore structures of the obtained carbonaceous material, resulting in decreased active ion storage space and reduced capacity. At this time, the carbonaceous material reaches adsorption equilibrium in a short time; at the same time, the interlayer spacing of the carbonaceous material decreases, the difficulty in intercalation and deintercalation of active ions increases, the first Coulombic efficiency reduces, and the density of the carbon skeleton structure increases. At this time, the carbonaceous material shows slower CO₂ adsorption rate. When the second temperature T2 is too low, more low-stability carbon will be retained in the carbon skeleton structure, resulting in fewer pores formed in the carbonaceous material, decreased active ion storage space, and reduced capacity. At this time, the carbonaceous material reaches adsorption equilibrium in a short time. In addition, when the second temperature T2 is too low, there may be more O elements that have not been removed, and the active ions cannot be reversibly deintercalated after the O atoms combine with the active ions, which will lead to reduced capacity and first Coulombic efficiency of the carbonaceous material.

In some embodiments, in S50, the second time t1 may be 1h-24h. For example, it can be 2h, 4h, 6h, 8h, 10h, 12h, 14h, 16h, 18h, 20h, 22h, 24h or a range consisting of any of the above numerical values. Optionally, the second time t1 is 6h-12h. Those skilled in the art can select an appropriate second time within the above range according to the second temperature used. For example, when the second temperature is relatively high, the second time can be appropriately shortened.

In some embodiments, the preparation method further comprises: S60, secondary crushing: the carbonaceous material obtained in S50 is crushed. At this time, a part of the agglomerated carbonaceous material can be crushed to make it meet the required particle size, which facilitates the preparation of the negative electrode slurry and negative electrode plate. Of course, in some embodiments, this step can be omitted.

In some embodiments, the preparation method comprises the following steps: S10, providing raw materials: the raw materials are organic carbon sources; S20, crushing: the raw materials are crushed; S30, washing and impurity removal: the crushed raw materials obtained in S20 are subjected to washing and impurity removal, and the washing and impurity removal process at least includes an acidic solution washing step and an alkaline solution washing step; S40, low-temperature pre-carbonization: the raw materials obtained after washing and impurity removal in S30 are placed into a kiln, and under the conditions of a protective gas atmosphere and a furnace pressure of <-2kPa, optionally -5kPa to -2kPa, heated to 300°C-600°C at a first rate of ≥20°C/min, optionally 20°C/min-35°C/min, and then incubated at this temperature for 1h-24h, and after the incubation, prepyrolyzed carbon is obtained; S50, high-temperature carbonization: the prepyrolyzed carbon obtained in S40 is placed in a kiln, under the conditions of a protective gas atmosphere, a furnace pressure of <-2kPa, optionally -5kPa to -2kPa, and a bulk density of ≤0.6g/cm³, heated to 1000°C-1600°C at a second rate, and then incubated at this temperature for 1h-24h, and after the incubation, the carbonaceous material is obtained, wherein in the CO₂ adsorption test of the carbonaceous material, the total CO₂ adsorption at 0°C and a relative pressure P/P₀ between 10⁻⁸ and 0.029 is recorded as A, the adsorption time is recorded as B, and the carbonaceous material satisfies: A/B≥1.7 cm³/(g×h) STP, where STP is the standard condition, P represents the test pressure of CO₂, and P₀ represents the saturated vapor pressure of CO₂ at 0°C. This enables carbonaceous materials to have higher capacity and first Coulombic efficiency, and can further improve the energy density, service life and rate performance of secondary batteries.

### Secondary battery

A third aspect of the embodiments of the present application provides a secondary battery.

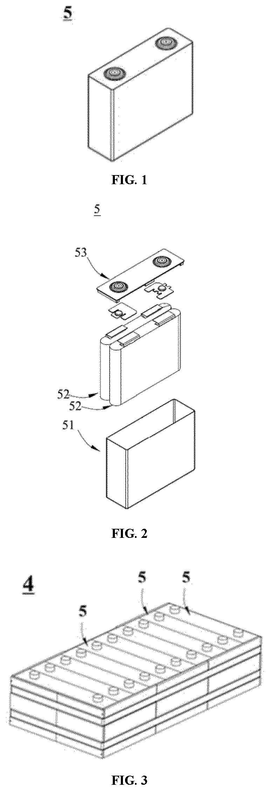

The secondary battery mentioned in the examples or embodiments of the present application refers to a single physical module comprising one or more battery cells to provide higher voltage and capacity. For example, the secondary battery mentioned in the present application may include battery cells, battery modules, battery packs, or the like. The battery cell is the smallest unit that makes up a secondary battery, and it can realize the functions of charging and discharging on its own. The present application has no particular limitation on the shape of the battery cell, which can be cylindrical, square or any other shape. For example, Fig. 1 shows a battery cell 5 with a square structure as an example.

In some embodiments, the battery cell includes an electrode assembly and an electrolyte, and the battery cell may further include an outer package. The outer package can be used to encapsulate the electrode assembly and electrolyte. The outer package may be a hard case, such as a hard plastic case, an aluminum case, or a steel case. The outer package can also be a soft pack, such as a bag-type soft pack. The material of the soft package can be plastic, such as one or more of polypropylene (PP), polybutylene terephthalate (PBT), and polybutylene succinate (PBS).

The electrode assembly usually includes a positive electrode plate, a negative electrode plate and the like. During the charging and discharging processes of the secondary battery, active ions are intercalated and deintercalated back and forth between the positive and negative electrode plates, and the electrolyte serves to conduct active ions between the positive and negative electrode plates. The electrode assembly can be made by a winding process and/or a stacking process.

In some examples, as shown in Fig. 2, the outer package can include a case 51 and a cover plate 53. The case 51 may include a bottom plate and a side plate connected to the bottom plate, with the bottom plate and the side plate enclosing to form an accommodating cavity. The case 51 has an opening that communicates with the accommodating cavity, and the cover plate 53 is used to cover the opening to close the accommodating cavity. The electrode assembly 52 is encapsulated within the accommodating cavity. The number of electrode assemblies 52 contained in the battery cell 5 can be one or more, and can be adjusted according to requirements.

In some embodiments of the present application, the battery cell can be assembled into a battery module, the number of battery cells included in the battery module can be multiple, and the specific number can be adjusted according to the application and capacity of the battery module. Fig. 3 is a schematic diagram of a battery module 4 as an example. As shown in Fig. 3, in the battery module 4, a plurality of battery cells 5 may be sequentially arranged along the length direction of the battery module 4. Of course, they can be arranged in any other way. The plurality of battery cells 5 can be further fixed by fasteners.

Optionally, the battery module 4 may further include a case having an accommodating space, in which the plurality of battery cells 5 are accommodated.

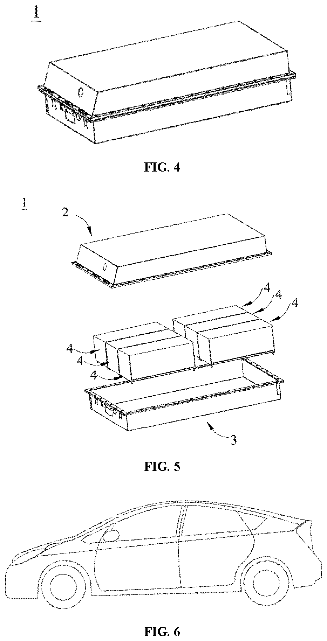

In some embodiments, the aforementioned battery modules can further be assembled into a battery pack, and the number of battery modules included in the battery pack can be adjusted according to the application and capacity of the battery pack. Figs. 4 and 5 are schematic diagrams of a battery pack 1 as an example. As shown in Figs. 4 and 5, the battery pack 1 may comprise a battery box and a plurality of battery modules 4 provided in the battery box. The battery box comprises an upper box body 2 and a lower box body 3, wherein the upper box body 2 is used to cover the lower box body 3 to form an enclosed space for accommodating the battery modules 4. The plurality of battery modules 4 may be arranged in the battery box in any manner.

### [Negative electrode plate]

In some embodiments, the negative electrode plate includes a negative electrode current collector and a negative electrode film layer provided on at least one surface of the negative electrode current collector. For example, the negative electrode current collector has two opposite surfaces in the direction of its own thickness, and the negative electrode film layer is provided on either or both of the two opposite surfaces of the negative electrode current collector.

In some embodiments, the negative electrode film layer includes the carbonaceous material of the first aspect of the embodiments of the present application or the carbonaceous material prepared by the method according to the second aspect of the embodiments of the present application. This enables the secondary battery to have high energy density, long service life and good rate performance at the same time.

In some embodiments, the negative electrode film layer may further include other negative electrode active materials in addition to the above-mentioned carbonaceous material. In some embodiments, the other negative electrode active materials include, but are not limited to, one or more of natural graphite, artificial graphite, soft carbon, silicon-based materials, tin-based materials and lithium titanate. The silicon-based material may include one or more of elemental silicon, silicon oxide, silicon-carbon composite, silicon-nitrogen composite and silicon alloy. The tin-based material may include one or more of elemental tin, tin oxide and tin alloy.

In some embodiments, the negative electrode film layer further optionally comprises a negative electrode conductive agent. There are no special restrictions on the types of the negative electrode conductive agent in the present application. As an example, the negative electrode conductive agent may include one or more of superconducting carbon, conductive graphite, acetylene black, carbon black, Ketjen black, carbon dot, carbon nanotube, graphene, and carbon nanofiber.

In some embodiments, the negative electrode film layer further optionally comprises a negative electrode binder. There are no particular limitations on the types of the negative electrode binder. By way of example, the negative electrode binder may include one or more of styrene butadiene rubber (SBR), water-soluble unsaturated resin SR-1B, water-based acrylic resin (such as polyacrylic acid (PAA), polymethacrylic acid (PMAA), and sodium polyacrylate (PAAS)), polyacrylamide (PAM), polyvinyl alcohol (PVA), sodium alginate (SA) and carboxymethyl chitosan (CMCS).

In some embodiments, the negative electrode film layer further optionally comprises other auxiliaries. As an example, other auxiliaries may include thickeners (e.g., sodium carboxymethyl cellulose (CMC)), PTC thermistor material and the like.

In some embodiments, the negative electrode current collector can be a metal foil or a composite current collector. As an example of a metal foil, a copper foil can be used. The composite current collector may comprise a high molecular material substrate layer and a metal material layer formed on at least one surface of the high molecular material substrate layer. As an example, the metal material may include one or more of copper, copper alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

The negative electrode film layer is usually formed by coating a negative electrode slurry on the negative electrode current collector, followed by drying and cold pressing. The negative electrode slurry is generally formed by dispersing the negative electrode active material, the optional conductive agent, the optional binder, and other optional auxiliaries in a solvent and sufficiently stirring the mixture. The solvent may be N-methyl pyrrolidone (NMP) or deionized water, but is not limited thereto.

The negative electrode plate does not exclude other additional functional layers other than the negative electrode film layer. For example, in some embodiments, the negative electrode plate of the present application may further include a conductive primer coating (e.g., composed of a conductive agent and a binder) sandwiched between the negative electrode current collector and the negative electrode film layer and arranged on the surface of the negative electrode current collector. In some embodiments, the negative electrode plate of the present application further comprises a protective layer covering the surface of the negative electrode film layer.

### [Positive electrode plate]

In some embodiments, the positive electrode plate includes a positive electrode current collector and a positive electrode film layer provided on at least one surface of the positive electrode current collector. For example, the positive electrode current collector has two opposite surfaces in the direction of its own thickness, and the positive electrode film layer is provided on either or both of the two opposite surfaces of the positive electrode current collector.

The positive electrode current collector may be a metal foil or a composite current collector. As an example of a metal foil, an aluminum foil can be used. The composite current collector may comprise a high molecular material substrate layer and a metal material layer formed on at least one surface of the high molecular material substrate layer. As an example, the metal material may include one or more of aluminum, aluminum alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

The positive electrode film layer typically comprises a positive electrode active material, an optional binder and an optional conductive agent. The positive electrode film layer is usually formed by coating a positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto. As an example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resin. As an example, the conductive agent for the positive electrode film layer can include one or more of superconducting carbon, conductive graphite, acetylene black, carbon black, Ketjen black, carbon dots, carbon nanotubes, graphene and carbon nanofibers.

The positive electrode active material may be a positive electrode active material for secondary batteries known in the art.

When the secondary battery of the present application is a lithium-ion battery, the positive electrode active material includes but is not limited to one or more of a lithium-containing transition metal oxide, a lithium-containing phosphate, and their respective modified compounds. Examples of the lithium transition metal oxide may include, but are not limited to, one or more of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and their respective modified compounds. Examples of the lithium-containing phosphate may include, but are not limited to, one or more of lithium iron phosphate, composites of lithium iron phosphate and carbon, lithium manganese phosphate, composites of lithium manganese phosphate and carbon, lithium manganese iron phosphate, composites of lithium manganese iron phosphate and carbon, and their respective modified compounds.

In some embodiments, in order to further improve the energy density of the secondary battery, the positive electrode active material for the lithium-ion battery may include one or more of lithium transition metal oxides with a general formula of LiₐNi_{b}Co_{c}M_{d}OₑA_{f} and modified compounds thereof. 0.8≤a≤1.2, 0.5≤b<1, 0<c<1, 0<d<1, 1≤e≤2, 0≤f≤1, M includes one or more selected from Mn, Al, Zr, Zn, Cu, Cr, Mg, Fe, V, Ti and B, and A includes one or more selected from N, F, S and Cl.

As an example, the positive electrode active material of the lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

When the secondary battery of the present application is a sodium-ion battery, the positive electrode active material may include but is not limited to one or more of sodium-containing transition metal oxides, polyanionic materials (such as phosphates, fluorophosphates, pyrophosphates, sulfates), and Prussian blue materials.

As an example, the positive electrode active material for sodium-ion batteries may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials and materials with a general formula of XₚM'_{q}(PO₄)ᵣOₓY₃₋ₓ. In the general formula XₚM'_{q}(PO₄)ᵣOₓY₃₋ₓ, 0<p≤4, 0<q≤2, 1≤r≤3, 0≤x≤2, X includes one or more selected from H⁺, Li⁺, Na⁺, K⁺ and NH₄⁺, M' is a transition metal cation, optionally including one or more selected from V, Ti, Mn, Fe, Co, Ni, Cu and Zn, Y is a halogen anion, optionally including one or more selected from F, Cl and Br.

In the present application, the above-mentioned modified compounds of the positive electrode active materials may be obtained by modifying the positive electrode active material by doping and/or surface coating.

### [Electrolyte]

The type of the electrolyte is not particularly limited in the present application, and can be selected according to actual requirements. For example, the electrolyte may be selected from at least one of solid electrolyte and liquid electrolyte (i.e., electrolyte solution).

In some embodiments, the electrolyte solution is employed as the electrolyte, and the electrolyte solution comprises an electrolyte salt and a solvent.

Types of the electrolyte salt are not specifically limited, and may be selected based on actual requirements.

When the secondary battery of the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP).

When the secondary battery of the present application is a sodium-ion battery, the electrolyte salt may include one or more of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluoro bis(oxalato)phosphate (NaDFOP), and sodium tetrafluoro(oxalato)phosphate (NaTFOP).

The type of the solvent is not particularly limited and may be selected based on actual requirements. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethylsulfonylethane (ESE).

In some embodiments, the electrolyte solution further optionally comprises an additive. For example, the additive may include a negative electrode film-forming additive, or may include a positive electrode film-forming additive, and may further include an additive capable of improving certain performances of the battery, such as an additive for improving the overcharging performance of the battery, an additive for improving the high temperature performance of the battery, an additive for improving the low temperature power performance of the battery.

### [Separator]

The secondary battery using an electrolyte solution and some secondary batteries using a solid electrolyte further include a separator. The separator is provided between the positive electrode plate and the negative electrode plate and functions to separate. The type of the separator is not particularly limited in the present application, and any well-known separator with a porous structure having good chemical stability and mechanical stability may be selected.

In some embodiments, the material of the separator may include one or more of glass fiber, non-woven cloth, polyethylene, polypropylene, and polyvinylidene fluoride. The separator may be a single-layer film or a multi-layer composite film. When the separator is a multi-layer composite film, the materials of the layers may be the same or different.

### [Preparation method]

The preparation method of the secondary battery according to the present application is well known. In some embodiments, the positive electrode plate, the separator, the negative electrode plate and the electrolyte solution can be assembled to form a secondary battery. As an example, the positive electrode plate, the separator and the negative electrode plate can be formed into an electrode assembly by a winding process and/or a stacking process, the electrode assembly is placed in an outer package, oven dried, poured with the electrolyte solution, and then subjected to vacuum packaging, standing, formation, shaping and other procedures to obtain a battery cell. A plurality of battery cells can be further connected in series or parallel-series connection to form a battery module. A plurality of battery modules can be further connected in series or parallel-series connection to form a battery pack. In some embodiments, a plurality of battery cells can also directly form a battery pack.

### Electrical apparatus

A fourth aspect of the embodiments of the present application provides an electrical apparatus comprising the secondary battery of the present application. The secondary battery can be used as a power source of the electrical apparatus, and can also be used as an energy storage unit of the electrical apparatus. The electrical apparatus may be, but is not limited to, a mobile device (e.g., a mobile phone, a tablet, a laptop), an electric vehicle (e.g., an all-electric vehicle, a hybrid electric vehicle, a plug-in hybrid electric vehicle, an electric bicycle, an electric scooter, an electric golf cart, an electric truck), an electric train, a ship, a satellite, an energy storage system, etc.

The specific type of the secondary battery, such as battery cell, battery module, or battery pack, can be selected according to the use requirements of the electrical apparatus.

Fig. 6 is a schematic diagram of an electrical apparatus as an example. The electrical apparatus is a all-electric vehicle, a hybrid electric vehicle or a plug-in hybrid electric vehicle, and the like. In order to meet the requirements of the electrical apparatus for high power and high energy density, a battery pack or a battery module may be used as the power source.

As another example, the electrical apparatus may be a mobile phone, a tablet, a laptop, etc. The electrical apparatus is generally required to be light and thin, and can use a battery cell as the power source.

### Examples

The following examples more specifically describe the disclosure of the present application. These examples are for illustrative purposes only, since it will be apparent to those skilled in the art that various modifications and changes can be made within the scope of the disclosure of the present application. Unless otherwise stated, all parts, percentages, and ratios reported in the following examples are based on mass, all reagents used in the examples are either commercially available or synthesized according to conventional methods, and can be directly used without further processing, and all the instruments used in the examples are commercially available.

### Example 1

Commercially available coconut shells were crushed using a jet mill until the volume particle size D50 was 6.8±0.5µm and D90 was 13.7±0.5µm, and then washed with a 3 mol/L aqueous solution of perchloric acid at 60°C for 12 h, and then washed with deionized water until neutral, then washed with a 3 mol/L aqueous solution of NaOH at 95°C for 24 h, then washed with deionized water until neutral, and then forced air dried to remove moisture. The dried powder was placed in a kiln, heated to 400°C at a rate of 30°C/min under the condition of nitrogen atmosphere and a furnace pressure of -5kPa, then kept for 10h, then heated to 1400°C at a rate of 5°C/min under the condition of nitrogen atmosphere, a furnace pressure of -5kPa, and a bulk density of 0.3g/cm³ and kept for 10h to obtain a carbonaceous material.

Referring to GB/T 21650.2-2008, the adsorption test of the carbonaceous material was carried out at 0°C with CO₂. The total CO₂ adsorption A at a relative pressure P/P₀ between 10⁻⁸ and 0.029 and the adsorption time B were recorded, where P denotes the test pressure of CO₂, and P₀ denotes the saturated vapor pressure of CO₂ at 0°C. The testing instrument can be the ASAP 2460 surface area and pore size analyzer from Micromeritics in U.S.

The Archimedean immersion volume displacement method was used to test the true density of carbonaceous materials using n-butanol as the medium.

### Examples 2-16 and Comparative Examples 1-7

The preparation method of the carbonaceous material is similar to that of Example 1, except that the preparation process parameters of the carbonaceous material are adjusted. See Table 1 for details.

### Comparative Example 8

Commercially available coconut shells were crushed using a jet mill until the volume particle size D50 was 6.8±0.5µm and D90 was 13.7±0.5µm, and then washed with a 3 mol/L aqueous solution of perchloric acid at 60°C for 12h, then washed with deionized water until neutral, and then forced air dried to remove moisture. The dried powder was placed in a kiln, heated to 400°C at a rate of 30°C/min under the condition of nitrogen atmosphere and a furnace pressure of -5kPa, then kept for 10h, then heated to 1400°C at a rate of 5°C/min under the condition of nitrogen atmosphere, a furnace pressure of -5kPa, and a bulk density of 0.3g/cm³ and kept for 10h to obtain a carbonaceous material.

### Comparative Example 9

Commercially available coconut shells were crushed using a jet mill until the volume particle size D50 was 6.8±0.5µm and D90 was 13.7±0.5µm, and then washed with a 3 mol/L aqueous solution of NaOH at 95°C for 24h, then washed with deionized water until neutral, and then forced air dried to remove moisture. The dried powder was placed in a kiln, heated to 400°C at a rate of 30°C/min under the condition of nitrogen atmosphere and a furnace pressure of -5kPa, then kept for 10h, then heated to 1400°C at a rate of 5°C/min under the condition of nitrogen atmosphere, a furnace pressure of -5kPa, and a bulk density of 0.3g/cm³ and kept for 10h to obtain a carbonaceous material.

### Comparative Example 10

Commercially available coconut shells were crushed using a jet mill until the volume particle size D50 was 6.8±0.5µm and D90 was 13.7±0.5µm. Then, the powder was placed in a kiln, heated to 400°C at a rate of 30°C/min under the condition of nitrogen atmosphere and a furnace pressure of -5kPa, then kept for 10h, then heated to 1400°C at a rate of 5°C/min under the condition of nitrogen atmosphere, a furnace pressure of -5kPa, and a bulk density of 0.3g/cm³ and kept for 10h to obtain a carbonaceous material.

### Comparative Example 11

Commercially available coconut shells were crushed using a jet mill until the volume particle size D50 was 6.8±0.5µm and D90 was 13.7±0.5µm. Then, the powder was placed in a kiln, heated to 400°C at a rate of 30°C/min under the condition of nitrogen atmosphere and a furnace pressure of -5kPa, then kept for 10h, then heated to 1400°C at a rate of 5°C/min under the condition of nitrogen atmosphere, a furnace pressure of -5kPa, and a bulk density of 0.3g/cm³ and kept for 10h, and then washed with a 3 mol/L aqueous solution of perchloric acid at 60°C for 12h, then washed with deionized water until neutral, and finally forced air dried to remove moisture to obtain a carbonaceous material.

### Comparative Example 12

Commercially available coconut shells were washed with a 3 mol/L aqueous solution of perchloric acid at 60°C for 12h, then washed with deionized water until neutral, then washed with a 3 mol/L aqueous solution of NaOH at 95°C for 24h, then washed with deionized water until neutral, then forced air dried to remove moisture, and then crushed using a jet mill until the volume particle size D50 was 6.8±0.5µm and D90 was 13.7±0.5µm. The resultant powder was placed in a kiln, heated to 400°C at a rate of 30°C/min under the condition of nitrogen atmosphere and a furnace pressure of -5kPa, then kept for 10h, then heated to 1400°C at a rate of 5°C/min under the condition of nitrogen atmosphere, a furnace pressure of -5kPa, and a bulk density of 0.3g/cm³ and kept for 10h to obtain a carbonaceous material.

### Comparative Example 13

Commercially available coconut shells were crushed using a jet mill until the volume particle size D50 was 6.8±0.5µm and D90 was 13.7±0.5µm, and then washed with a 3 mol/L aqueous solution of perchloric acid at 60°C for 12 h, and then washed with deionized water until neutral, then washed with a 3 mol/L aqueous solution of NaOH at 95°C for 24 h, then washed with deionized water until neutral, and then forced air dried to remove moisture. The dried powder was placed in a kiln, heated to 1400°C at a rate of 5°C/min under the condition of nitrogen atmosphere, a furnace pressure of -5kPa, and a bulk density of 0.3g/cm³ and kept for 10h to obtain a carbonaceous material.

### Performance Test

The carbonaceous material prepared in the Examples and Comparative Example, the binder styrene butadiene rubber (SBR), the thickener sodium carboxymethyl cellulose (CMC-Na) and the conductive agent carbon black in a mass ratio of 96.2:1.8:1.2:0.8 were fully mixed with stirring in a proper amount of solvent deionized water to form a uniform negative electrode slurry; the negative electrode slurry was uniformly coated on the surface of a negative electrode current collector copper foil, and dried in an oven for later use. Ethylene carbonate (EC), ethyl methyl carbonate (EMC) and diethyl carbonate (DEC) were mixed in a volume ratio of 1:1:1 to obtain an organic solvent, and then NaPF₆ was dissolved in the organic solvent to prepare an electrolyte solution with a concentration of 1 mol/L. Afterwards, a CR2430 button cell was assembled in an argon-protected glove box using a sodium metal sheet as a counter electrode and a polyethylene (PE) film as the separator.

At 25°C, the button battery prepared in Examples and Comparative Examples was first discharged to 0V at a constant current density of 10 mA/g, and the first cycle discharge capacity of the button battery was recorded. Then, the battery was charged to 2.0V at a constant current density of 10 mA/g, and the first cycle charge capacity of the button battery was recorded.

Reversible gram capacity (mAh/g) of carbonaceous material = first cycle charge capacity of button battery/mass of carbonaceous material.

First Coulombic efficiency (%) of carbonaceous material = first cycle charge capacity of button battery/first cycle discharge capacity of button battery×100%.

Based on the test results in Table 1, it can be seen that in the CO₂ adsorption test of the carbonaceous material, when the total CO₂ adsorption A at 0°C and a relative pressure P/P₀ between 10⁻⁸ and 0.029 and CO₂ adsorption time B satisfy: A/B≥1.7 cm³/(g×h) STP, optionally ≥3.0 cm³/(g×h) STP, more optionally ≥8.0 cm³/(g×h) STP, the carbonaceous material can have both high capacity and high first Coulombic efficiency.

For each of the carbonaceous materials prepared in Comparative Examples 1-13, in the CO₂ adsorption test, the total CO₂ adsorption A at 0°C and a relative pressure P/P₀ between 10⁻⁸ and 0.029 and CO₂ adsorption time B fail to satisfy A/B≥1.7 cm³/(g×h) STP, and none of the carbonaceous materials can achieve high capacity and high first Coulombic efficiency at the same time.

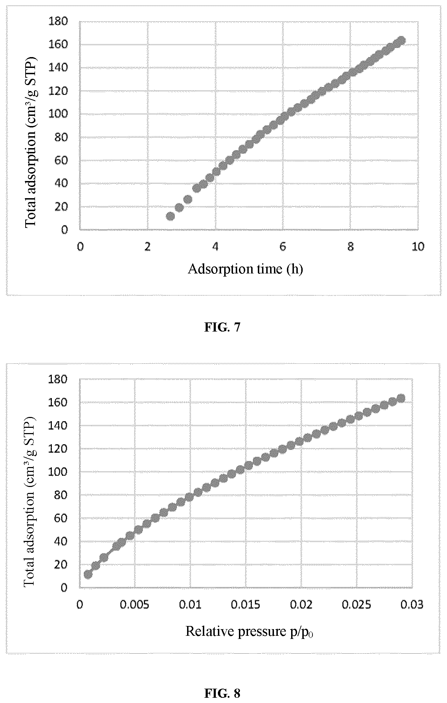

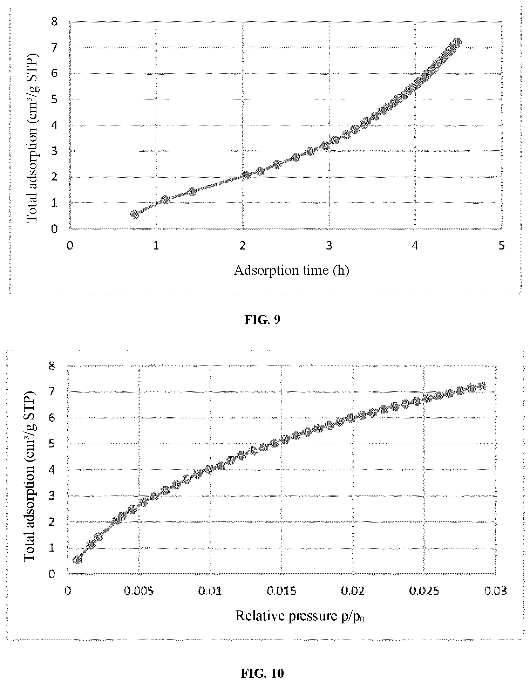

Figs. 7 and 8 are CO₂ adsorption test curves of the carbonaceous material prepared in Example 1. Figs. 9 and 10 are CO₂ adsorption test curves of the carbonaceous material prepared in Comparative Example 1. According to the test results in Table 1, it can be seen that compared with Comparative Example 1, the capacity and first Coulombic efficiency of the carbonaceous material prepared in Example 1 are significantly improved. The possible reason is that the carbonaceous material prepared in Example 1 has a large amount of active ion storage space and high space availability, which can facilitate the intercalation, storage and deintercalation of active ions.

Based on the test results of Examples 1-16, it can also be seen that when the CO₂ adsorption time B further satisfies B≥5h, optionally ≥7h, the carbonaceous material can have higher capacity and first Coulombic efficiency.

It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications applied to the embodiments that can be conceived by those skilled in the art, and other modes constructed by combining some of the constituent elements of the embodiments are also included in the scope of the present application.

**Table 1**

| No. | Cru shin g | Aci dic sol utio n was hin g | Alk alin e sol utio n was hin g | Low temperature pre-carbonization | | | High temperature carbonization | | | | A/B [cm³/ (g×h ) STP] | Adso rptio n time B (h) | Tota l adso rptio nA [cm³ /g STP ] | Tru e den sity (g/ cm ³) | Reve rsibl e gra m capa city (mA h/g) | First Coul ombi c effic ienc y (%) |
|---|---|---|---|---|---|---|---|---|---|---|---|---|---|---|---|---|
| | | | | Fur nac e pres sure (kp a) | Firs t rate (°C/ min ) | First temp eratur e (°C) | Fur nac e pres sure (kp a) | Bul k den sity (g/ cm ³) | Sec ond rate (°C/ min ) | Seco nd temp eratur e (°C) | | | | | | |
| Exam ple 1 | Yes | Yes | Yes | -5 | 30 | 400 | -5 | 0.3 | 5 | 1400 | 17.2 1 | 9.5 | 163. 50 | 1.2 00 | 450 | 92.0 |
| Exam ple 2 | Yes | Yes | Yes | -5 | 30 | 300 | -5 | 0.3 | 5 | 1400 | 3.70 | 5.4 | 19.9 8 | 1.3 94 | 332 | 84.9 |
| Exam ple 3 | Yes | Yes | Yes | -5 | 30 | *500* | -5 | 0.3 | 5 | 1400 | 11.4 3 | 8.4 | 96.0 1 | 1.2 91 | 423 | 89.5 |
| Exam ple 4 | Yes | Yes | Yes | -5 | 30 | 600 | -5 | 0.3 | 5 | 1400 | 7.38 | 7.2 | 53.1 4 | 1.3 52 | 381 | 86.9 |
| Exam ple 5 | Yes | Yes | Yes | -5 | 20 | 400 | -5 | 0.3 | 5 | 1400 | 5.24 | 6.7 | 35.1 1 | 1.3 81 | 369 | 86.3 |
| Exam ple 6 | Yes | Yes | Yes | -5 | 25 | 400 | -5 | 0.3 | 5 | 1400 | 9.56 | 8.1 | 77.4 4 | 1.3 14 | 415 | 88.7 |
| Exam ple 7 | Yes | Yes | Yes | -3 | 30 | 400 | -5 | 0.3 | 5 | 1400 | 14.8 0 | 9.0 | 133. 20 | 1.2 54 | 439 | 91.2 |
| Exam ple 8 | Yes | Yes | Yes | -2 | 30 | 400 | -5 | 0.3 | 5 | 1400 | 6.54 | 7.0 | 45.7 8 | 1.3 66 | 375 | 86.7 |
| Exam ple 9 | Yes | Yes | Yes | -5 | 30 | 400 | -5 | 0.3 | 5 | 1000 | 4.90 | 6.3 | 30.8 7 | 1.3 84 | 357 | 86.1 |
| Exam ple 10 | Yes | Yes | Yes | -5 | 30 | 400 | -5 | 0.3 | 5 | 1200 | 13.2 1 | 8.7 | 114. 93 | 1.2 75 | 431 | 90.5 |
| Exam ple 11 | Yes | Yes | Yes | -5 | 30 | 400 | -5 | 0.3 | 5 | 1600 | 4.22 | 5.8 | 24.4 8 | 1.3 87 | 348 | 85.6 |
| Exam ple 12 | Yes | Yes | Yes | -5 | 30 | 400 | -5 | 0.3 | 5 | 1700 | 2.53 | 4.9 | 12.4 0 | 1.4 52 | 299 | 84.2 |
| Exam ple 13 | Yes | Yes | Yes | -5 | 30 | 400 | -5 | 0.3 | 15 | 1400 | 2.40 | 4.8 | 11.5 2 | 1.4 56 | 295 | 84.0 |
| Exam ple 14 | Yes | Yes | Yes | -5 | 30 | 400 | -3 | 0.3 | 5 | 1400 | 8.57 | 7.8 | 66.8 5 | 1.3 36 | 402 | 88.2 |
| Exam ple 15 | Yes | Yes | Yes | -5 | 30 | 400 | -2 | 0.3 | 5 | 1400 | 4.01 | 5.7 | 22.8 6 | 1.3 90 | 341 | 85.4 |
| Exam ple 16 | Yes | Yes | Yes | -5 | 30 | 400 | -5 | 0.6 | 5 | 1400 | 7.60 | 7.4 | 56.2 4 | 1.3 46 | 392 | 87.2 |
| Comp arative Exam ple 1 | Yes | Yes | Yes | -5 | 30 | 800 | -5 | 0.3 | 5 | 1400 | 1.61 | 4.5 | 7.25 | 1.4 83 | 286 | 83.2 |
| Comp arativ e Exam ple 2 | Yes | Yes | Yes | -5 | 30 | 230 | -5 | 0.3 | 5 | 1400 | 0.81 | 3.1 | 2.51 | 1.5 68 | 263 | 80.7 |
| Comp arativ e Exam ple 3 | Yes | Yes | Yes | -5 | 10 | 400 | -5 | 0.3 | 5 | 1400 | 1.23 | 3.9 | 4.80 | 1.5 28 | 273 | 82.1 |
| Comp arativ e Exam ple 4 | Yes | Yes | Yes | -1 | 30 | 400 | -5 | 0.3 | 5 | 1400 | 1.02 | 3.6 | 3.67 | 1.5 49 | 269 | 81.3 |
| Comp arativ e Exam ple 5 | Yes | Yes | Yes | -5 | 30 | 400 | -5 | 0.3 | 5 | 900 | 0.56 | 2.4 | 1.34 | 1.7 12 | 254 | 78.3 |
| Comp arativ e Exam ple 6 | Yes | Yes | Yes | -5 | 30 | 400 | -1 | 0.3 | 5 | 1400 | 1.40 | 4.2 | 5.88 | 1.5 08 | 279 | 82.6 |
| Comp arativ e Exam ple 7 | Yes | Yes | Yes | -5 | 30 | 400 | -5 | 0.8 | 5 | 1400 | 1.50 | 4.3 | 6.45 | 1.4 97 | 281 | 83.0 |
| Comp arativ e Exam ple 8 | Yes | Yes | No | -5 | 30 | 400 | -5 | 0.3 | 5 | 1400 | 1.29 | 4.1 | 5.29 | 1.5 13 | 277 | 82.3 |
| Comp arativ e Exam ple 9 | Yes | No | Yes | -5 | 30 | 400 | -5 | 0.3 | 5 | 1400 | 0.71 | 2.9 | 2.06 | 1.6 48 | 258 | 80.0 |
| Comp arativ e Exam ple 10 | Yes | No | No | -5 | 30 | 400 | -5 | 0.3 | 5 | 1400 | 0.45 | 2.1 | 0.95 | 1.7 52 | 252 | 76.4 |
| Comp arativ e Exam ple 11 | Yes | Yes | No | -5 | 30 | 400 | -5 | 0.3 | 5 | 1400 | 1.64 | 4.7 | 7.71 | 1.4 72 | 290 | 83.6 |
| Comp arativ e Exam ple 12 | Yes | Yes | Yes | -5 | 30 | 400 | -5 | 0.3 | 5 | 1400 | 0.17 | 1.8 | 0.31 | 2.0 15 | 241 | 73.4 |
| Comp arativ e Exam ple 13 | Yes | Yes | Yes | / | / | / | -5 | 0.3 | 5 | 1400 | 0.30 | 1.9 | 0.57 | 1.8 41 | 250 | 75.1 |

## Claims

1. A carbonaceous material, wherein in the CO₂ adsorption test of the carbonaceous material, the total CO₂ adsorption at 0°C and a relative pressure P/P₀ between 10⁻⁸ and 0.029 is recorded as A, the adsorption time is recorded as B, and the carbonaceous material satisfies: A/B≥1.7 cm³/(g×h) STP, wherein STP is the standard condition, P represents the test pressure of CO₂, and P₀ represents the saturated vapor pressure of CO₂ at 0°C.

2. The carbonaceous material according to claim 1, wherein 1.7 cm³/(g×h) STP≤A/B≤20 cm³/(g×h) STP, optionally, 3.0 cm³/(g×h) STP≤A/B≤20 cm³/(g×h) STP.

3. The carbonaceous material according to claim 1 or 2, wherein B≥5h, optionally, 5h≤B≤10h.

4. The carbonaceous material according to any one of claims 1-3, wherein A ≥10 cm³/g STP, optionally, 15 cm³/g STP≤A≤200 cm³/g STP.

5. The carbonaceous material according to any one of claims 1-4, wherein the carbonaceous material has a true density ρ of ≤1.45g/cm³, optionally 1.0g/cm³-1.45g/cm³.

6. The carbonaceous material according to any one of claims 1-5, wherein the carbonaceous material includes a plurality of nanopore structures, and optionally, the carbonaceous material includes a plurality of pore structures with a diameter of 10nm or less.

7. The carbonaceous material according to any one of claims 1-6, wherein,
in the Raman spectrum of the carbonaceous material, I_{d}/I_{g} is 0.90-1.25, optionally 1.05-1.15, I_{d} represents the d-peak intensity of the Raman shift in the range of 1350±50cm⁻¹, and I_{g} represents the g-peak intensity of the Raman shift in the range of 1580±50cm⁻¹; and/or,
the interlayer spacing of the (002) crystal plane of the carbonaceous material is ≥0.37nm, optionally 0.37nm-0.42nm; and/or,
in the X-ray diffraction spectrum of the carbonaceous material, the 20 value corresponding to the (002) crystal plane peak is between 22° and 24°.

8. The carbonaceous material according to any one of claims 1-7, wherein the carbonaceous material satisfies at least one of the following conditions (1) to (5):
(1) the volume particle size Dv50 of the carbonaceous material is 3µm-15µm, optionally 4µm-6µm;
(2) the volume particle size Dv90 of the carbonaceous material is 8µm-30µm, optionally 9µm-12µm;
(3) the specific surface area of the carbonaceous material is 1m²/g-10m²/g, optionally 1m²/g-5m²/g;
(4) the powder compacted density of the carbonaceous material under a force of 50,000N is 0.90g/cm³-1.05g/cm³, optionally 0.93g/cm³-1.02g/cm³; and
(5) the tap density of the carbonaceous material is 0.80g/cm³-0.95g/cm³, optionally 0.85g/cm³-0.9g/cm³.

9. A method for preparing carbonaceous materials, comprising the following steps:
S10, providing raw materials: the raw materials are organic carbon sources;
S20, crushing: the raw materials are crushed;
S30, washing and impurity removal: the crushed raw materials obtained in S20 are subjected to washing and impurity removal, and the washing and impurity removal process at least includes an acidic solution washing step and an alkaline solution washing step;
S40, low-temperature pre-carbonization: the raw materials obtained after washing and impurity removal in S30 are placed into a kiln, and under the conditions of a protective gas atmosphere and a furnace pressure of <-2kPa, heated to a first temperature T1 at a first rate of ≥20°C/min, then incubated at the first temperature T1 for a first time t1, and after the incubation, prepyrolyzed carbon is obtained;
S50, high-temperature carbonization: the prepyrolyzed carbon obtained in S40 is placed in a kiln, under the conditions of a protective gas atmosphere, a furnace pressure of ≤-2kPa, and a bulk density of ≤0.6g/cm³, heated to a second temperature T2 at a second rate, and then incubated at the second temperature T2 for a second time t2, and after the incubation, the carbonaceous material is obtained, wherein in the CO₂ adsorption test of the carbonaceous material, the total CO₂ adsorption at 0°C and a relative pressure P/P₀ between 10⁻⁸ and 0.029 is recorded as A, the adsorption time is recorded as B, and the carbonaceous material satisfies: A/B≥1.7 cm³/(g×h) STP, where STP is the standard condition, P represents the test pressure of CO₂, and P₀ represents the saturated vapor pressure of CO₂ at 0°C.

10. The method according to claim 9, wherein in S10, the organic carbon source includes one or more of biomass materials and thermoplastic resin materials,
optionally, the biomass material includes one or more of energy crops and biomass waste;
optionally, the thermoplastic resin material includes one or more of phenolic resin, acrylic resin, polyvinyl chloride, polycarbonate, epoxy resin, polyformaldehyde, coumarone resin and petroleum resin.

11. The method according to claim 9 or 10, wherein,
in S30, the washing and impurity removal process includes the following steps in sequence: acidic solution washing, water washing, alkaline solution washing, water washing and drying; or, in S30, the washing and impurity removal process includes the following steps in sequence: alkaline solution washing, water washing, acidic solution washing, water washing and drying.

12. The method according to any one of claims 9-11, wherein, in S30, the acidic solution satisfies at least one of the following conditions (1) to (4):
(1) the H⁺ concentration of the acidic solution is 0.1mol/L-6moL/L, optionally 1mol/L-6moL/L;
(2) the washing temperature of the acidic solution is 10°C-95°C, optionally 30°C-95°C;
(3) the washing time of the acidic solution is 1h-24h, optionally 10h-24h; and
(4) the solute of the acidic solution includes one or more of hydrochloric acid, nitric acid, sulfuric acid and perchloric acid, and the solvent is water.

13. The method according to any one of claims 9-12, wherein, in S30, the alkaline solution satisfies at least one of the following conditions (1) to (4):
(1) the OH⁻ concentration of the alkaline solution is 0.1mol/L-6moL/L, optionally 1mol/L-6moL/L;
(2) the washing temperature of the alkaline solution is 10°C-95°C, optionally 30°C-95°C;
(3) the washing time of the alkaline solution is 1h-24h, optionally 10h-24h; and
(4) the solute of the alkaline solution includes NaOH, KOH or a combination thereof, and the solvent is water.

14. The method according to any one of claims 9-13, wherein,
in S40, the temperature T1 is 300°C-600°C, optionally 400°C-500°C; and/or,
in S40, the time t1 is 1h-24h, optionally 6h-12h; and/or,
in S40, the heating rate is 20°C/min-35°C/min, optionally 25°C/min-30°C/min; and/or,
in S40, the protective gas includes nitrogen, argon, helium or a combination thereof; and/or,
in S40, the furnace pressure is -5kPa to -2kPa, optionally -4.5kPa to -3kPa.

15. The method according to any one of claims 9-14, wherein,
in S50, the temperature T2 is 1000°C-1600°C, optionally 1200°C-1400°C; and/or,
in S50, the time t1 is 1h-24h, optionally 6h-12h; and/or,
in S50, the heating rate is 1°C/min-10°C/min, optionally 3°C/min-5°C/min; and/or,
in S50, the protective gas includes nitrogen, argon, helium or a combination thereof; and/or,
in S50, the furnace pressure is -5kPa to -2kPa, optionally -4.5kPa to -3kPa.

16. A secondary battery comprising a negative electrode plate, the negative electrode plate comprising the carbonaceous material according to any one of claims 1-8 or the carbonaceous material prepared by the method according to any one of claims 9-15.

17. An electrical apparatus, comprising the secondary battery according to claim 16.
